# EUROPÄISCHE PATENTSCHRIFT

(11) **EP 2 502 300 B1**
(45) Veröffentlichungstag und Bekanntmachung des Hinweises auf die Patenterteilung: **17.04.2013**
(21) Anmeldenummer: 10779460.4
(22) Anmeldetag: 30.10.2010
(51) Int. Cl.: H01M 8/04

(54) **BRENNSTOFFZELLENSYSTEM MIT EINEM FLÜSSIGKEITSABSCHEIDER IM ANODENKREISLAUF**
FUEL CELL SYSTEM WITH GAS-LIQUID SEPARATOR IN ANODE RECIRCULATION PATH
SYSTÈME DE PILE À COMBUSTIBLE AVEC SÉPARATEUR GAZ-LIQUIDE DANS LE BOUCLE DE RECIRCULATION ANODIQUE

(30) Priorität: 16.11.2009 DE 102009053499
(43) Veröffentlichungstag der Anmeldung: 26.09.2012
(73) Patentinhaber: Daimler AG, 70327 Stuttgart (DE)
(72) Erfinder: BAUR, Thomas, 73235 Weilheim (DE); RICHTER, Holger, 73230 Kirchheim (DE)
(74) Vertreter: JENSEN & SON
(86) Internationale Anmeldenummer: PCT/EP2010/006638
(87) Internationale Veröffentlichungsnummer: WO 2011/057722

(56) Entgegenhaltungen:
- DE-A1-102007 033 203
- DE-A1-102007 061 959
- US-A1- 2006 099 471

## Beschreibung

Die Erfindung betrifft ein Brennstoffzellensystem mit einem Anodenkreislauf nach der im Oberbegriff von Anspruch 1 näher definierten Art.

Aus dem allgemeinen Stand der Technik ist es bekannt bei Brennstoffzellensystemen Anodenkreisläufe vorzusehen, mittels welchen unverbrauchtes Abgas aus dem Anodenbereich der Brennstoffzelle rezirkuliert und zusammen mit frischem Wasserstoff wieder dem Anodenbereich der Brennstoffzelle zugeführt werden kann. Um den im Anodenbereich aufgetretenen Druckverlust auszugleichen ist im Bereich eines solchen Anodenkreislaufs eine Rezirkulationsfördereinrichtung notwendig. Diese kann prinzipiell aus einem Gebläse, einem Verdichter oder dergleichen bestehen. Es wäre jedoch auch denkbar, diese in der Art aufzubauen, dass der einströmende frische Wasserstoff den rezirkulierten Gasstrom in der Art einer Gasstrahlpumpe beziehungsweise Jet-Pumpe ansaugt. Auch eine Kombination derartiger Rezirkulationsfördereinrichtungen ist denkbar.

Typischerweise wird als Rezirkulationsfördereinrichtung nun jedoch ein Gebläse eingesetzt. Um ein solches Gebläse sicher und zuverlässig betreiben zu können und insbesondere beim Abstellen des Systems ein Festfrieren von flüssigen Tröpfchen im Bereich des Gebläses und damit ein Blockieren des Gebläselaufrads zu verhindern, ist es aus dem Stand der Technik in Form der WO 2006/056276 A1 bekannt, sowohl vor als auch hinter der Rezirkulationsfördereinrichtung Flüssigkeitsabscheider anzuordnen. Diese können dann untereinander so verbunden werden, dass der geodätisch höher liegende Wasserabscheider sein abgeschiedenes Wasser beispielsweise in den Bereich des zweiten Wasserabscheiders oder seiner Zuleitung einleitet. Die Zuleitung von frischem Wasserstoff erfolgt in diesem Aufbau in der typischen Art und Weise zwischen der Rezirkulationsfördereinrichtung und dem ersten Wasserabscheider. Dies hat den Nachteil, dass in der Leitungslänge zwischen diesen beiden Bauelementen Tröpfchen auskondensieren und gegebenenfalls in den Bereich des Ventils und/oder der Rezirkulationsfördereinrichtung zurücklaufen. Wird ein solches Brennstoffzellensystem nun bei Temperaturen unterhalb des Gefrierpunkts abgestellt, so kann das auskondensierte Wasser gegebenenfalls einfrieren und bei der Wiederinbetriebnahme zu Funktionsstörungen oder Undichtheiten führen.

Aus der DE 10 2007 033 203 A1 ist es außerdem bekannt, einen Abscheider als eine Baueinheit mit einer Rezirkulationsfördereinrichtung zu verbinden. Dies wird insbesondere vorgeschlagen, um die Rotationsbewegung der Rezirkulationsfördereinrichtung zum Abscheiden von flüssigen Tröpfchen zu nutzen und den Aufbau insgesamt möglichst einfach und effizient zu gestalten. Dabei ist ein parallel vorhandener zweiter Abscheider in der Schrift beschrieben, welcher dem Abscheider nach der Rezirkulationsfördereinrichtung aus der zuvor beschriebenen Schrift entspricht. Die Integration des Abscheiders in Strömungsrichtung vor der Rezirkulationsfördereinrichtung in den Einströmbereich derselben hat den Nachteil, dass im Bereich der Rezirkulationsfördereinrichtung dann sehr viel Wasser anfällt, sodass hier ebenfalls die Gefahr eines Einfrierens gegeben ist.

Es ist nun die Aufgabe der hier vorliegenden Erfindung, ein Brennstoffzellensystem mit einem Anodenkreislauf gemäß dem Oberbegriff von Anspruch 1 zu schaffen, welches die oben genannten Nachteile vermeidet und einen einfachen, sicheren und zuverlässig arbeitenden Aufbau für den Anodenkreislauf bereitstellt.

Erfindungsgemäß wird diese Aufgabe durch die im kennzeichnenden Teil von Anspruch 1 genannten Merkmale gelöst. Die weiteren abhängigen Ansprüche geben vorteilhafte Ausgestaltungen und Weiterbildungen der Erfindung an.

Durch die Einleitung des frischen zugeführten Wasserstoffs in den Bereich des Flüssigkeitsabscheiders wird erreicht, dass in dem Gasstrom verbleibende Flüssigkeit, welche durch den frischen und aufgrund seiner Entspannung von einem hohen Druck aus typischerweise sehr kaltem frischem Gas auskondensiert unmittelbar in dem Flüssigkeitsabscheider auskondensiert und somit in diesem verbleiben kann. Der Flüssigkeitsabscheider ist bei diesem Aufbau baulich mit der Rezirkulationsfördereinrichtung integriert. Damit wird verhindert, dass Leitungselemente mit auskondensierter Flüssigkeit beschickt werden, welche dann gegebenenfalls zufrieren könnten. Durch die Integration mit der Rezirkulationsfördereinrichtung zu einer integrierten Baueinheit ist außerdem ein sehr kompakter Aufbau zu erzielen.

In einer besonders günstigen und vorteilhaften Weiterbildung des erfindungsgemäßen Aufbaus ist es dabei vorgesehen, dass der mit der Rezirkulationsfördereinrichtung integriert ausgeführte Flüssigkeitsabscheider in Strömungsrichtung des rezirkulierten Gasstroms nach der Rezirkulationsfördereinrichtung angeordnet ist. Damit wird erreicht, dass der frisch zugeführte Wasserstoffstrom nicht durch die Rezirkulationsfördereinrichtung geleitet werden muss, und dass in dem Flüssigkeitsabscheider primär das auskondensierte Wasser abgeschieden wird.

In einer entsprechend vorteilhaften Weiterbildung der Erfindung ist es außerdem vorgesehen, dass in dem Anodenkreislauf ein zweiter Flüssigkeitsabscheider vorgesehen ist, welcher mit dem ersten Flüssigkeitsabscheider in Verbindung steht, wobei der zweite Flüssigkeitsabscheider in Strömungsrichtung des rezirkulierten Gasstroms vor der Rezirkulationsfördereinrichtung angeordnet ist. Damit wird erreicht, dass in dem ersten Flüssigkeitsabscheider lediglich die durch den frischen Wasserstoffgasstrom auskondensierte Flüssigkeit abgeschieden werden muss, während die aus dem Anodenbereich ausgetragene Flüssigkeit beispielsweise in dem zweiten Abscheider abgeschieden werden kann. Dieser Aufbau ermöglicht es, das Produktwasser, welches die größte Menge an abgeschiedenem Wasser in dem rezirkulierten Gasstrom sein wird, vor dem Erreichen der Rezirkulationsfördereinrichtung abzuscheiden, um dieses nicht energieaufwändig über die Rezirkulationsfördereinrichtung fördern zu müssen. Nach der Rezirkulationsfördereinrichtung wird dann in dem mit der Rezirkulationsfördereinrichtung integriert ausgeführten Flüssigkeitsabscheider die aufgrund des zugeführten frischen Wasserstoffs und der damit erfolgten Temperaturabsenkung noch auskondensierte Teil der Flüssigkeit abgeschieden und der Aufbau erreicht ein immer trocken laufendes Rezirkulationsgebläse, sodass hier keine Gefahr besteht, dass dieses einfriert. Dadurch, dass die Flüssigkeitsabscheider untereinander verbunden sind, reicht es aus, mit einem einzigen Leitungselement mit einer Ventileinrichtung das Wasser aus dem Anodenkreislauf abzulassen, sodass hier - insbesondere hinsichtlich der Beschickung mit Wasserstoff sehr dichtungsanfällige - Schnittstellen eingespart werden können.

In einer sehr vorteilhaften und günstigen Weiterführung dieser Idee der Erfindung kann es ferner vorgesehen sein, dass beide Flüssigkeitsabscheider mit der Rezirkulationsfördereinrichtung als integrierte Baueinheit ausgeführt sind. Dieser Aufbau ist dann besonders kompakt. Er wird aufgrund der vergleichsweise großen Masse der integrierten Baueinheit im Gegensatz zu den umliegenden Leitungselementen langsamer abkühlen, sodass die Gefahr einer Auskondensation von Flüssigkeit im Bereich der Baueinheit minimiert wird. Außerdem können weitere Schnittstellen und Leitungselemente eingespart werden, was insbesondere hinsichtlich der gegenüber dem in den Leitungselementen befindlichen Wasserstoff abzudichtenden Schnittstellen einen entscheidenden Vorteil hinsichtlich der Kosten und der Montage darstellt.

Das erfindungsgemäße Brennstoffzellensystem erlaubt es also, einen Anodenkreislauf auszuführen, welcher auch bei Temperaturen unterhalb des Gefrierpunkts zuverlässig arbeitet und dabei mit einer minimalen Anzahl an Schnittstellen und Bauteilen auskommt. Ein solcher einfacher, kostengünstiger und zuverlässiger Aufbau ist dabei prädestiniert, um seine Verwendung in einem Fahrzeug zu finden. Die bevorzugte Verwendung des erfindungsgemäßen Brennstoffzellensystems liegt demnach in der Verwendung des Brennstoffzellensystems in einem Fahrzeug, zur elektrischen Energieversorgung von Fahrantrieb und/oder Nebenverbrauchern.

Weitere vorteilhafte Ausgestaltungen des erfindungsgemäßen Brennstoffzellensystems ergeben sich aus den restlichen abhängigen Unteransprüchen und werden anhand des Ausführungsbeispiels deutlich, welches unter Bezugnahme auf die Figuren nachfolgend erläutert wird.

Dabei zeigen:
- Fig. 1: ein stark schematisiert angedeutetes Brennstoffzellensystem mit einem Anodenkreislauf mit den Komponenten gemäß der Erfindung; und
- Fig. 2: eine Ausführung eines Flüssigkeitsabscheiders gemäß der Erfindung.

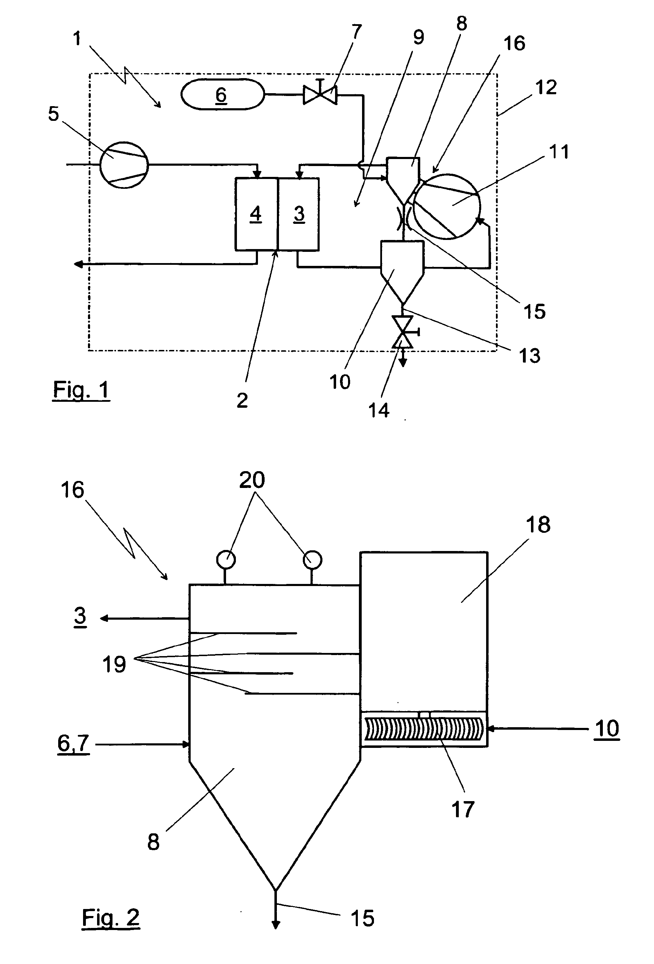

In der Darstellung der Figur 1 ist ein Brennstoffzellensystem 1 zu erkennen, dessen Kern eine Brennstoffzelle 2 bildet, welche einen Anodenbereich 3 und einen Kathodenbereich 4 aufweist, und welche beispielsweise als Stapel von PEM-Brennstoffzellen aufgebaut sein kann. Dem Kathodenbereich 4 wird über eine Luftfördereinrichtung 5 Luft als sauerstoffhaltiges Gas zugeführt. Die aus dem Kathodenbereich 4 abströmende Luft kann direkt oder über hier nicht dargestellte Komponenten wie beispielsweise einen Brenner, eine Turbine oder dergleichen an die Umgebung abgegeben werden.

Der Anodenbereich 3 wird mit Wasserstoff aus einem Druckgasspeicher 6 versorgt, in welchem der Wasserstoff unter hohem Druck gasförmig gespeichert ist. Der Wasserstoff strömt über ein Absperrventil 7, in dessen Bereich er sich entspannt, in einen dann später noch näher beschriebenen Flüssigkeitsabscheider 8 in den Anodenbereich 3. Aus dem Anodenbereich 3 gelangt das unverbrauchte Restgas in einem Anodenkreislauf 9 über einen zweiten Flüssigkeitsabscheider 10 und eine Rezirkulationsfördereinrichtung 11 in den Bereich der Wasserfalle 8 und kann dort vermischt mit dem aus dem Druckgasspeicher 6 stammenden frischen Wasserstoff zurück in den Anodenbereich 3 strömen.

Dieser stark vereinfacht dargestellte Aufbau eines Brennstoffzellensystems 1 kann beispielsweise in einem hier nur schematisch angedeuteten Fahrzeug 12 eingesetzt werden, um dessen Fahrantrieb und/oder dessen Nebenverbraucher mit elektrischer Energie zu versorgen.

Eine Besonderheit des Aufbaus des Anodenkreislaufs 9 des Brennstoffzellensystems 1 gemäß Figur 1 liegt nun in der Verwendung der beiden Flüssigkeitsabscheider 8, 10. Flüssigkeitsabscheider 8 kann dabei auch als Wasserfalle bezeichnet werden, während der zweite Flüssigkeitsabscheider 10 den Hauptabscheider bildet. Aufgrund der Strömungsrichtung des rezirkulierten Gasstroms in dem Anodenkreislauf 9 ist es so, dass der rezirkulierte Gasstrom zuerst den Hauptabscheider 10 erreicht. Es ist nun so, dass in einer Brennstoffzelle 2 das Produktwasser primär im Kathodenbereich 4 anfällt und über die Abluft abgeführt wird. Ein Teil des Produktwassers entsteht jedoch auch im Anodenbereich 3 und wird dementsprechend über den rezirkulierten Gasstrom abgeführt. Am Hauptabscheider 10 wird nun dieses Wasser abgeschieden, um zu verhindern, dass Tröpfchen in den Bereich der Rezirkulationsfördereinrichtung 11, welche typischerweise als Rezirkulationsgebläse ausgebildet ist, gelangen. Von dem Hauptabscheider 10 führt dann ein Leitungselement 13 mit einem Ventil 14 in die Umgebung oder auch in die Zuluft zum Kathodenbereich 4, sodass das sich im Hauptabscheider 10 sammelnde Wasser von Zeit zu Zeit abgelassen werden kann. Außerdem kann der Hauptabscheider 10 über einen an sich bekannten und üblichen Schwappschutz verfügen, sodass einmal in ihm angesammeltes Wasser nicht zurück in den Bereich der Leitungen des Anodenkreislaufs 9 gelangen kann.

Das so im Bereich des Hauptabscheiders 10 von flüssigen Tröpfchen befreite Wasser gelangt also in die Rezirkulationsfördereinrichtung 11 und von dort in den Bereich der Wasserfalle 8. Im Bereich der Wasserfalle 8 wird es mit dem frischen zuströmenden Wasserstoff aus dem Druckgasspeicher 6 vermischt. Da dieser aufgrund der Abkühlung bei der Entspannung vergleichsweise kalt ist, wird aus dem vergleichsweise warmen feuchten Gasstrom nach der Rezirkulationsfördereinrichtung 11 weiteres Wasser auskondensieren. Dieses sammelt sich dann im Bereich der Wasserfalle 8, welche ebenfalls so ausgebildet sein kann, dass über einen entsprechenden Schwappschutz 19 oder dergleichen ein Eindringen von Wasser sowohl rückwärts in Richtung des Rezirkulationsgebläses 11 als auch vorwärts in Richtung des Anodenbereichs 3 verhindert werden kann. Außerdem kann, wie in der Darstellung der Figur 1 zu erkennen ist, eine Verbindung 15 zwischen der Wasserfalle 8 und dem Hauptabscheider 10 vorgesehen sein. Diese Verbindung 15 kann insbesondere über eine Querschnittsverengung verfügen, um ein Abströmen des verdichteten Gases zurück in den Bereich des Hauptabscheiders zu vermeiden beziehungsweise zu minimieren. Über die Verbindung 15 kann jedoch das sich in der Wasserfalle 8 sammelnde Wasser in den Hauptabscheider abgeführt werden, sodass lediglich ein Leitungselement 13 und ein Ventil 14 zum Ablassen des gesamten im Anodenkreislauf 9 gesammelten Wassers notwendig sind. Dadurch wird die Anzahl der Bauteile und insbesondere die Anzahl der bei wasserstoffführenden Leitungen immer sehr aufwändig abzudichtenden Schnittstellen deutlich reduziert.

Nun ist es so, dass zumindest einer der beiden Wasserabscheider 8, 10, in jedem Fall die Wasserfalle 8 mit der Rezirkulationsfördereinrichtung 11 als integrierte Baueinheit 16 ausgebildet ist. Diese integrierte Baueinheit 16 ist in der Figur 2 zu erkennen. Der Aufbau ist dabei stark schematisiert dargestellt. Er besteht im Wesentlichen aus dem Rezirkulationsgebläse 11, welches ein Laufrad 17 und einen typischerweise elektromotorischen Antrieb 18 für das Laufrad 17 aufweist. Die integrierte Baueinheit 16 weist außerdem die Wasserfalle 8 auf, welche hier in einem prinzipmäßigen Querschnitt dargestellt ist. Wie durch den Pfeil angedeutet, strömt aus dem Bereich des Hauptabscheiders 10 der Gasstrom in den Bereich des Laufrads 17 ein und wird von dem Laufrad in den Bereich der Wasserfalle 8 gefördert. Dort vermischt er sich mit dem in einer niedrigeren geodätischen Höhe einströmenden frischen Wasserstoff aus dem Bereich des Druckgasspeichers 6 beziehungsweise des Absperrventils 7. Über geeignete Einbauten 19 zum Schwappschutz, welche beispielsweise aus hier prinzipmäßig angedeuteten Prallblechen und/oder Gestricken bestehen können, gelangt der so vermischte Gasstrom unter Zurücklassung der in ihm auskondensierenden Flüssigkeitströpfchen in den oberen Teil der Wasserfalle 8 und kann dort in Richtung des Anodenbereichs 3 abströmen. Durch die Einströmung des frischen Wasserstoffs in einem Bereich mit einer sehr niedrigen geodätischen Höhe bei einem bestimmungsgemäßen Gebrauch der Wasserfalle 8 und der Einströmung des rezirkulierten Gasstroms aus dem Bereich des Laufrads 17 in einer vergleichbaren oder etwas höheren geodätischen Höhe sowie das Abströmen des gemischten Gasstroms in Richtung des Anodenbereichs 3 in einer deutlich höheren geodätischen Höhe kann dabei relativ sicher und zuverlässig erreicht werden, dass auskondensierende Flüssigkeitströpfchen im Bereich der Wasserfalle 8 zurückbleiben und nicht mit in den Anodenbereich 3 gerissen werden, wo sie gegebenenfalls die Gaszuleitungskanäle zu den Membranen verstopfen und bei Temperaturen unterhalb des Gefrierpunkts durch Eisbildung blockieren könnten.

Die Wasserfalle 8 zeigt außerdem zwei Anschlüsse 20 im oberen Bereich, welche beispielsweise als Anschlüsse für einen Drucksensor und einen Differenzdrucksensor eingesetzt werden können. Über diesen integrierten Aufbau wird eine entsprechende Baueinheit 16 erreicht, welche einfach und effizient arbeitet und mit entsprechend wenig Schnittstellen auskommt. Sie ist dabei insbesondere hinsichtlich des Betriebs bei Temperaturen unterhalb des Gefrierpunkts vergleichsweise zuverlässig, da das Einfrieren insbesondere des Laufrads 17 und das Zufrieren von eventuellen Leitungselementen zwischen den Bauteilen weitgehend vermieden werden kann.

Neben der Ausführung wie in Figur 2 dargestellt, wäre es natürlich denkbar, auch den Hauptabscheider 10 mit in die Baueinheit 16 zu integrieren, beispielsweise diesen unterhalb der Wasserfalle 8 anzuordnen und in diesem Fall dann den elektromotorischen Antrieb 18 unterhalb des Laufrads zu verlagern, um so eine sehr kompakte integrierte Baueinheit 16 zu erreichen.

## Patentansprüche

1. Brennstoffzellensystem mit einem Anodenkreislauf, welcher unverbrauchtes Gas aus dem Anodenbereich einer Brennstoffzelle über eine Rezirkulationsfördereinrichtung in den Anodenbereich zurückführt, wobei im Anodenkreislauf wenigstens ein Flüssigkeitsabscheider angeordnet ist, welcher baulich mit der Rezirkulationsfördereinrichtung zu einer Baueinheit integriert ausgeführt ist,
**dadurch gekennzeichnet, dass**
die Zuführung von frischem Wasserstoff in den Anodenbereich (3) durch Zufuhr des Wasserstoffs in den Flüssigkeitsabscheider (8) erfolgt.

2. Brennstoffzellensystem nach Anspruch 1,
**dadurch gekennzeichnet, dass**
der mit der Rezirkulationsfördereinrichtung (11) integriert ausgeführte Flüssigkeitsabscheider (8) in Strömungsrichtung des rezirkulierten Gasstroms nach der Rezirkulationsfördereinrichtung (11) angeordnet ist.

3. Brennstoffzellensystem nach Anspruch 1 oder 2,
**dadurch gekennzeichnet, dass**
im Anodenkreislauf (9) ein zweiter Flüssigkeitsabscheider (10) vorgesehen ist, welcher mit dem ersten Flüssigkeitsabscheider (8) in Verbindung (15) steht, und welcher in Strömungsrichtung des rezirkulierten Gasstroms vor der Rezirkulationsfördereinrichtung (11) angeordnet ist.

4. Brennstoffzellensystem nach Anspruch 3,
**dadurch gekennzeichnet, dass**
über die Verbindung (15) eine Ableitung von Flüssigkeit aus dem ersten Flüssigkeitsabscheider (8) in den zweiten Flüssigkeitsabscheider (9) erfolgt.

5. Brennstoffzellensystem nach Anspruch 3 oder 4,
**dadurch gekennzeichnet, dass**
beide Flüssigkeitsabscheider (8, 10) in der Rezirkulationsfördereinrichtung (11) als integrierte Baueinheit (16) ausgeführt sind.

6. Brennstoffzellensystem nach einem der Ansprüche 1 bis 5,
**dadurch gekennzeichnet, dass**
die Zufuhr des frischen Wasserstoffs in einer im bestimmungsgemäßen Gebrauch, niedrigeren geodätischen Höhe in dem ersten Flüssigkeitsabscheider (8) angeordnet ist, als die Weiterführung der vermischten Gasströme zum Anodenbereich (3).

7. Brennstoffzellensystem nach Anspruch 6,
**dadurch gekennzeichnet, dass**
die Zufuhr des rezirkulierten Gasstroms in den ersten Flüssigkeitsabscheider (8) im bestimmungsgemäßen Gebrauch in einer geodätischen Höhe zwischen der Zufuhr des frischen Wasserstoffs und der Weiterführung der vermischten Gasströme angeordnet ist.

8. Brennstoffzellensystem nach einem der Ansprüche 4 bis 7,
**dadurch gekennzeichnet, dass**
die Ableitung der gesamten Flüssigkeit aus dem Bereich des Anodenkreislaufs (9) über ein Leitungselement (13) mit wenigstens einer Ventileinrichtung (14) aus dem Bereich des zweiten Flüssigkeitsabscheiders (10) erfolgt.

9. Brennstoffzellensystem nach einem der Ansprüche 1 bis 8,
**dadurch gekennzeichnet, dass**
zumindest einer der Flüssigkeitsabscheider (8, 10) einen Schwappschutz (19) aufweist.

10. Verwendung des Brennstoffzellensystems nach einem der Ansprüche 1 bis 9, in einem Fahrzeug (12) zur elektrischen Energieversorgung von Fahrantrieb und/oder Nebenverbrauchern.

## Claims

1. Fuel cell system with an anode circuit which returns unused gas from the anode region of a fuel cell to the anode region via a recirculation conveying device, wherein at least one liquid separator integrated with the recirculation conveying device to form an assembly is provided in the anode circuit,
**characterised in that**
fresh hydrogen is supplied to the anode region (3) by feeding the hydrogen into the liquid separator (8).

2. Fuel cell system according to claim 1,
**characterised in that**
the liquid separator (8), which is integrated with the recirculation conveying device (11), is situated downstream of the recirculation conveying device (11) in the direction of flow of the recirculated gas stream.

3. Fuel cell system according to claim 1 or 2,
**characterised in that**
a second liquid separator (10), which is connected to the first liquid separator (8) and which is situated upstream of the recirculation conveying device (11) in the direction of flow of the recirculated gas stream, is provided in the anode circuit (9).

4. Fuel cell system according to claim 3,
**characterised in that**
liquid is diverted from the first liquid separator (8) to the second liquid separator (10) via the connection (15).

5. Fuel cell system according to claim 3 or 4,
**characterised in that**
both liquid separators (8, 10) are designed as integrated assemblies (16) in the recirculation conveying device (11).

6. Fuel cell system according to any of claims 1 to 5,
**characterised in that**
the feed of the fresh hydrogen is arranged in the first liquid separator (8) at an elevation head which is lower in the intended use than the onward transport of the mixed gas streams to the anode region (3).

7. Fuel cell system according to claim 6,
**characterised in that**
the feed of the recirculated gas stream into the first liquid separator (8) is arranged at an elevation head which in the intended use lies between the feed of the fresh hydrogen and the onward transport of the mixed gas streams.

8. Fuel cell system according to any of claims 4 to 7,
**characterised in that**
the whole of the liquid is discharged from the region of the anode circuit (9) via a line element (13) comprising at least one valve device (14) from the region of the second liquid separator (10).

9. Fuel cell system according to any of claims 1 to 8,
**characterised in that**
at least one of the liquid separators (8, 10) comprises a splash guard (19).

10. Use of a fuel cell system according to any of claims 1 to 9 in a vehicle (12) for the supply of electric energy to a travelling drive and/or to secondary loads.

## Revendications

1. Système de pile à combustible doté d'un circuit d'anode, grâce auquel le gaz non consommé provenant de la zone de l'anode d'une pile à combustible peut être réinjecté dans la zone de l'anode à l'aide d'un dispositif de recirculation, dans le circuit d'anode étant disposé au moins un séparateur de liquide, lequel est réuni au dispositif de recirculation pour former une unité, **caractérisé en ce que** l'admission d'hydrogène frais dans la zone d'anode (3) s'effectue en admettant l'hydrogène dans le séparateur de liquide (8).

2. Système de pile à combustible selon la revendication 1, **caractérisé en ce que** le séparateur de liquide (8) intégré au dispositif de recirculation (11) est disposé en aval du dispositif de recirculation (11) dans le sens d'écoulement du flux de gaz qui a recirculé.

3. Système de pile à combustible selon la revendication 1 ou 2, **caractérisé en ce qu'**il est prévu dans le circuit d'anode (9) un second séparateur de liquide (10) qui est relié (15) au premier séparateur de liquide (8) et qui est disposé en amont du dispositif de recirculation (11) dans le sens d'écoulement du flux de gaz qui a recirculé.

4. Système de pile à combustible selon la revendication 3, **caractérisé en ce que** le raccordement (15) permet de dévier le liquide provenant du premier séparateur de liquide (8) dans le second séparateur de liquide (9).

5. Système de pile à combustible selon la revendication 3 ou 4, **caractérisé en ce que** les deux séparateurs de liquide (8, 10) sont réunis dans le dispositif de recirculation (11) pour former une unité (16).

6. Système de pile à combustible selon l'une quelconque des revendications 1 à 5, **caractérisé en ce que** l'admission de l'hydrogène frais, dans une utilisation conforme, est disposée dans le premier séparateur de liquide (8) à une hauteur géodésique plus petite que l'évacuation des flux de gaz mélangés vers la zone de l'anode (3).

7. Système de pile à combustible selon la revendication 6, **caractérisé en ce que** l'admission du flux de gaz qui a recirculé est disposée dans le premier séparateur (8), dans des conditions d'utilisation conformes, à une hauteur géodésique entre l'admission de l'hydrogène frais et l'évacuation des flux de gaz mélangés.

8. Système de pile à combustible selon l'une quelconque des revendications 4 à 7, **caractérisé en ce que** la déviation de l'ensemble du liquide à partir de la zone du circuit de l'anode (9) s'effectue par un élément de conduite (13) avec au moins un dispositif de vanne (14) à partir de la zone du second séparateur de liquide (10).

9. Système de pile à combustible selon l'une quelconque des revendications 1 à 8, **caractérisé en ce qu'**au moins l'un des séparateurs de liquide (8, 10) présente un déflecteur (19).

10. Utilisation du système de pile à combustible selon l'une quelconque des revendications 1 à 9, dans un véhicule (12) pour l'alimentation d'énergie électrique d'un entraînement et/ou de consommateurs auxiliaires.
